# EUROPÄISCHE PATENTANMELDUNG

(11) **EP 4 667 723 A1**
(43) Veröffentlichungstag der Anmeldung: **24.12.2025**
(21) Anmeldenummer: 25182860.4
(22) Anmeldetag: 15.06.2025
(51) Int. Cl.: F02C 1/02, F02C 1/06, F02C 1/10, F02C 6/16, F02C 7/08

(54) **VORRICHTUNG ZUR UMWANDLUNG VON DRUCK IN ENERGIE, INSBESONDERE ELEKTRISCHE ENERGIE**

(30) Priorität: 17.06.2024 DE 102024116953
(71) Anmelder: Kempka, Reinhold, 41468 Neuss (DE); Kempka, Marita, 41468 Neuss (DE); Kempka, Benjamin, 41468 Neuss (DE); Kempka, Patrick, 41468 Neuss (DE)
(72) Erfinder: Kempka, Reinhold, 41468 Neuss (DE); Kempka, Marita, 41468 Neuss (DE); Kempka, Benjamin, 41468 Neuss (DE); Kempka, Patrick, 41468 Neuss (DE)
(74) Vertreter: Hoffmann Eitle

(57) **Zusammenfassung**

Die Erfindung betrifft eine Vorrichtung zur Umwandlung von Druck in Energie, insbesondere elektrische Energie, wobei die Vorrichtung (1) eine Verdichtungseinheit (2) und ein Umwandlungseinheit (4) umfasst, wobei die Verdichtungseinheit (2) mindestens eine Verdichtungskammer (6) umfasst, wobei die mindestens eine Verdichtungskammer (6) einen Einlass (8) für ein Gas, einen Eintritt (10) für ein Verdichtungsgas und einen Auslass (12) für das Gas umfasst, wobei die Umwandlungseinheit (4) einen Eingang (14) für das Gas und einen Ausgang (16) für das Gas umfasst, wobei der Auslass (12) für das Gas mit dem Eingang (14) für das Gas fluidisch verbunden ist, wobei der Einlass (8) für das Gas mit dem Ausgang (16) für das Gas fluidisch verbunden ist, wobei die Verdichtungskammer (6) zum Verdichten von Gas mittels eines Verdichtungsgases, insbesondere Stickstoff und/oder Kohlenstoffdioxid, ausgebildet ist, wobei die Umwandlungseinheit (4) zum Umwandeln von Gasdruck in Energie, insbesondere elektrische Energie, ausgebildet ist.

## Beschreibung

### GEBIET DER ERFINDUNG

Die Erfindung betrifft eine Vorrichtung zur Umwandlung von Druck in Energie, insbesondere elektrische Energie, und ein System zur Umwandlung von Druck in Energie, insbesondere elektrische Energie.

### STAND DER TECHNIK

Eine Vorrichtung zur Umwandlung von Druck in Energie, insbesondere elektrische Energie, wird genutzt, um bei Bedarf Druck in Energie, insbesondere elektrische Energie, umzuwandeln. Auf diese Weise kann ein Energiebedarf auf einfache Weise erfüllt werden. Der Druck dann dabei beispielsweise durch vorher gewonnene, aber ungenutzte Energie erzeugt, werden, um so die Energie zu speichern. Eine Speichermöglichkeit in Form von Druck ist gerade im Hinblick auf den Ausbau regenerativer Energien wichtig. Regenerative Energien wie beispielsweise Windkraft oder Solarenergie werden vermehrt zum Umweltschutz eingesetzt. Dabei kann die durch Windkraft oder Solarenergie bereit gestellt Energie nicht frei skaliert werden, sondern ist zum Beispiel vom Wetter und der Jahreszeit abhängig. Folglich kann die bereitgestellte regenerative Energie häufig kleiner oder größer als der benötigte Energiebedarf sein. Daher ist es wichtig die regenerative Energie speichern zu können.

Eine einfache Möglichkeit zur Speicherung von Energie ist in Form von Druck wie beispielsweise Druckluft. Dabei bietet Druck gerade den Vorteil einer einfachen und sicheren Energiespeicherung beispielsweise gegenüber Batterien. Batterien benötigen Lithium, das nur begrenzt verfügbar ist und unter umweltschädlichen Bedingungen gewonnen wird. Zudem bergen Lithiumbatterien die Gefahr eines Batteriebrandes. Mithin ist die Speicherung von Energie in Form von Druck ein wichtiges Element für die Nutzung regenerativer Energie und den Umweltschutz.

Um den Druck wieder in Energie, insbesondere elektrische Energie umzuwandeln, wird der Druck normalerweise einfach durch eine Umwandlungseinheit wie bspw. eine Strömungsmaschine in Energie umgewandelt. Dabei weist der Druck am Eingang der Umwandlungseinheit einen hohen Druck und eine hohe Temperatur auf. In der Umwandlungseinheit entspannt sich das Gas beim Durchströmen der Umwandlungseinheit. Hierdurch verringert sich der Druck und die Temperatur des Gas am Ausgang.

Normalerweise wird das Gas am Ausgang einfach in die Umwelt abgegeben. Jedoch weist das Gas auch am Ausgang immer noch einen höheren Druck als der Umgebungsdruck auf, sodass dieser gegenüber dem Umgebungsdruck höhere Druck ungenutzt an die Umwelt abgegeben wird. Mithin wird der ungenutzte Druck nicht in Energie, wie beispielsweise elektrische Energie, umgewandelt, sodass der Wirkungsgrad verschlechtert wird. Zudem müssen zur kontinuierlichen Betreibung einer solchen Umwandlungseinheit große Mengen an Gas vorliegen, um einen kontinuierlichen Betrieb der Umwandlungseinheit zu gewährleisten. Somit wird eine große Menge Platz benötigt, um die erforderliche Menge an Gas, das unter Druck steht, bereitzustellen.

Basierend auf diesem Stand der Technik ist es die Aufgabe der vorliegenden Erfindung eine effiziente Vorrichtung zur Umwandlung von Druck in Energie, insbesondere elektrische Energie, mit einem hohen Wirkungsgrad vorzuschlagen, die geringe Mengen an Gas, das unter Druck steht, sowie wenige Bauraum benötigt und zudem kostengünstig, platzsparend und wartungsarm ist. Ferner ist es die Aufgabe der Erfindung ein System zur Umwandlung von Druck in Energie, insbesondere elektrische Energie, vorzuschlagen.

### ZUSAMMENFASSUNG DER ERFINDUNG

Gemäß einem ersten Aspekt der Erfindung wird die oben genannte Aufgabe durch eine Vorrichtung zur Umwandlung von Druck in Energie, insbesondere elektrische Energie, gelöst, wobei die Vorrichtung eine Verdichtungseinheit und eine Umwandlungseinheit umfasst, wobei die Verdichtungseinheit mindestens eine Verdichtungskammer umfasst, wobei die mindestens eine Verdichtungskammer einen Einlass für ein Gas, einen Eintritt für ein Verdichtungsgas und einen Auslass für das Gas umfasst, wobei die Umwandlungseinheit einen Eingang für das Gas und einen Ausgang für das Gas umfasst, wobei der Auslass für das Gas mit dem Eingang für das Gas fluidisch verbunden ist, wobei der Einlass für das Gas mit dem Ausgang für das Gas fluidisch verbunden ist, wobei die mindestens eine Verdichtungskammer zum Verdichten von Gas mittels eines Verdichtungsgases, insbesondere Stickstoff und/oder Kohlenstoffdioxid, ausgebildet ist, wobei die Umwandlungseinheit zum Umwandeln von Gasdruck in Energie, insbesondere elektrische Energie, ausgebildet ist.

Die Vorrichtung bietet den Vorteil, dass das Gas durch die Verdichtung in der Verdichtungskammer wiederverwendet werden kann. Mithin wird der verbliebene Druck des Gases am Ausgang der Umwandlungseinheit nicht an die Umwelt abgegeben, sondern durch eine Verdichtung und damit eine Druckerhöhung in der Verdichtungseinheit wieder für die Umwandlungseinheit nutzbar gemacht. Auf diese Weise ist die Vorrichtung besonders effizient. Zudem wird eine geringe Mengen an Gas, das unter Druck steht, benötigt. Somit kann der Bauraum reduziert werden, sodass die Vorrichtung kostengünstiger und platzsparender ist. Die Vorrichtung ist insbesondere kostengünstig, da keine aufwendigen Materialien notwendig sind wie beispielsweise für Lithiumbatterien. Ferner ist die Vorrichtung besonders wartungsarm, da die Verwendung und Nutzung von Druck als Energieform besonders wenig Verschleiß erzeugt.

Die Umwandlung von Druck in Energie, insbesondere elektrische Energie, kann durch die Freisetzung von Energie durch die Expansion des Gases erfolgen. Der Druck kann ein Druck größer als 1 bar sein. Die Energie kann jegliche Art von Energie sein, die aus Druck erzeugt werden kann. Beispielsweise kann die Energie Bewegungsenergie sein. Bevorzug kann die Energie elektrische Energie sein. Auf diese Weise kann der Druck in eine sehr vielseitig einsetzbare Energie umgewandelt werden.

Die Verdichtungseinheit kann für höhere Drücke ausgelegt sein. Die Verdichtungseinheit kann insbesondere für eine Reparatur lösbar in der Vorrichtung angeordnet sein. Die Vorrichtung, insbesondere die Umwandlungseinheit und/oder die Verdichtungseinheit, kann für einen Druck bis zu maximal 15 bar, bevorzugt bis zu maximal 12 bar, besonders bevorzugt bis zu maximal 10 bar ausgebildet sein. Die Die Vorrichtung, insbesondere die Umwandlungseinheit und/oder die Verdichtungseinheit, kann für einen Temperaturbereich des Gases von -10°C - 150°C, bevorzugt von 1°C-100°C und besonders bevorzugt von 5°C-80°C ausgebildet sein.

Die Verdichtungseinheit umfasst mindestens eine Verdichtungskammer umfasst. Dabei kann die Verdichtungskammer jegliche Form aufweisen. So kann die Verdichtungskammer zum Beispiel zylindrisch, kugelförmig oder kegelförmig sein. Die Verdichtungseinheit, und/oder die mindestens eine Verdichtungskammer kann eine austauschbare Einheit sein. Die Verdichtungseinheit umfasst mindestens eine Verdichtungskammer kann insbesondere für eine Reparatur lösbar in der Vorrichtung angeordnet sein.

Der Einlass für ein Gas, der Eintritt für ein Verdichtungsgas und/oder der Auslass für das Gas können beispielsweise einen Druckluftanschluss, insbesondere eine Druckluftkupplung, umfassen. Der Einlass für ein Gas, der Eintritt für ein Verdichtungsgas und/oder der Auslass für das Gas können Öffnungen in der mindestens einen Verdichtungskammer sein. Der Einlass für ein Gas, der Eintritt für ein Verdichtungsgas und/oder der Auslass für das Gas können Rohre und/oder Schläuche sein. Mithin können der Einlass für ein Gas, der Eintritt für ein Verdichtungsgas und/oder der Auslass für das Gas eine räumliche Erstreckung aufweisen. Der Einlass kann für einen Druck von 1-4 bar, bevorzugt von 1-3 bar, ausgebildet sein. Der Eintritt kann für einen Druck von 4-12 bar, bevorzugt von 6-10 bar, ausgebildet sein. Der Auslass kann für einen Druck von 4-12 bar, bevorzugt von 6-10 bar, ausgebildet sein.

Die Umwandlungseinheit kann eine austauschbare Einheit sein. Die Umwandlungseinheit kann insbesondere für eine Reparatur lösbar in der Vorrichtung angeordnet sein.

Der Eingang für das Gas und der Ausgang für das Gas können beispielsweise Druckluftanschlüsse, insbesondere Druckluftkupplung, umfassen. Der Eingang für das Gas und der Ausgang für das Gas können Öffnungen in der Umwandlungseinheit sein. Der Eingang für das Gas und der Ausgang für das Gas können Rohre und/oder Schläuche sein. Mithin können der Eingang für das Gas und der Ausgang für das Gas eine räumliche Erstreckung aufweisen.

Der Auslass für das Gas ist mit dem Eingang für das Gas fluidisch verbunden, und wobei der Einlass für das Gas mit dem Ausgang für das Gas fluidisch verbunden ist. Mithin können die Umwandlungseinheit und die mindestens eine Verdichtungskammer einen Gaskreislauf bilden. An den Gaskreislauf kann der Eintritt für ein Verdichtungsgas angeschlossen sein. Mithin können die Umwandlungseinheit und die mindestens eine Verdichtungskammer derart ausgebildet sein, dass ein Gas zwischen der Umwandlungseinheit und der mindestens eine Verdichtungskammer zirkulieren kann. "Fluidisch verbunden" kann bedeuten, dass Gas ohne Verluste, beispielsweise zwischen dem Auslass und dem Eingang, fließen kann.

Die mindestens eine Verdichtungskammer ist zum Verdichten von Gas mittels eines Verdichtungsgases, insbesondere Stickstoff und/oder Kohlenstoffdioxid, ausgebildet. Die mindestens eine Verdichtungskammer kann derart ausgebildet sein, dass der Druck innerhalb der mindestens einen Verdichtungskammer erhöht werden kann, indem ein Verdichtungsgas hinzugefügt werden kann. Die mindestens eine Verdichtungskammer kann derart ausgebildet sein, dass zunächst Gas am Eingang einströmen kann, anschließend der Eingang verschlossen werden kann und dann Verdichtungsgas über den Eintritt zur Verdichtung des Gases eintreten kann. Die Verdichten von Gas kann beispielsweise durch die Steuerung des Einlass für ein Gas, des Eintritt für ein Verdichtungsgas und des Auslass für das Gas ein Gas verdichten. Ferner kann die Verdichtungskammer Verdichtungsmittel, insbesondere mechanische Verdichtungsmittel, aufweisen. Das Verdichtungsmittel, insbesondere das mechanische Verdichtungsmittel, kann beispielsweise eine Pumpe sein.

Ein Verdichtungsgas kann ein Gas sein, dass einen höheren Druck als das Gas am Eingang der Verdichtungskammer aufweist. Das Verdichtungsgas kann mit dem Gas am Eingang vermischbar sein. Der Gesamtdruck kann durch den Druck des Gases am Eingang und den Druck des Verdichtungsgases eingestellt werden. Die mindestens eine Verdichtungskammer kann derart ausgebildet sein, dass der Druck durch das Mengenverhältnis von Gas am Eingang und Verdichtungsgas eingestellt werden kann.

Das Verdichtungsgas kann insbesondere Stickstoff und/oder Kohlenstoffdioxid sein. Beide Gase können besonders effizient gewonnen werden, sodass die Effizienz der Vorrichtung gesteigert werden kann. Zudem sind beide Gase ungefährlich, da sie in der Luft vorkommen. Mithin kann die Vorrichtung besonders umweltfreundlich und sicher sein. Außerdem können Stickstoff und/oder Kohlenstoffdioxid effizient mit überschüssiger elektrischer Energie gewonnen werden, sodass die Vorrichtung effizienter werden kann, da die überschüssige regenerative Energie zur Gewinnung des Verdichtungsgases eingesetzt werden kann.

Die Umwandlungseinheit ist zum Umwandeln von Gasdruck in Energie, insbesondere elektrische Energie, ausgebildet ist. Die Umwandlung kann beispielsweise mittels eines Generators erfolgen. Die Umwandlungseinheit kann ein oder mehrere Teile umfassen. Insbesondere kann die Umwandlungseinheit einen Teil umfassen, der die Druckluft in Bewegungsenergie umwandelt. Die Umwandlungseinheit kann einen weiteren Teil umfassen, der die Bewegung in elektrische Energie umwandelt.

In einem Ausführungsbeispiel kann die mindestens eine Verdichtungskammer mindestens einen Drucklufteinlass umfassen.

Auf diese Weise kann gespeicherte Druckluft in die Vorrichtung eingeführt werden, um den Druckverlust durch die Umwandlungseinheit auszugleichen. Auf diese Weise kann die Effizienz der Vorrichtung erhöht werden. Zudem kann dadurch die Menge an Verdichtungsgas reduziert werden, sodass die Vorrichtung besonders kostengünstig und effizient arbeiten kann.

Der mindestens eine Drucklufteinlass kann beispielsweise ein Druckluftanschluss, insbesondere eine Druckluftkupplung, umfassen. Der mindestens eine Drucklufteinlass kann eine Öffnung in der mindestens einen Verdichtungskammer sein. Der mindestens eine Drucklufteinlass kann ein Rohr und/oder ein Schlauch sein. Mithin kann der mindestens eine Drucklufteinlass eine räumliche Erstreckung aufweisen. Der mindestens eine Drucklufteinlass kann mit dem Eingang für das Gas verbunden sein. Somit kann beispielsweise Druckluft aus dem Drucklufteinlass im Eingang mit dem Gas aus der Umwandlungseinheit gemischt werden. Der Drucklufteinlass kann für einen Druck von 1-4 bar, bevorzugt von 2-3 bar, ausgebildet sein.

In einem Ausführungsbeispiel kann die Verdichtungseinheit mindestens eine Heizkammer umfassen, wobei insbesondere die mindestens eine Heizkammer zum Verbrennen eines Brennstoffs, insbesondere von Wasserstoff, ausgebildet sein kann.

Durch die mindestens eine Heizkammer kann die Verdichtungseinheit und die mindestens eine Verdichtungskammer beheizt werden. Somit kann das Gas in der Verdichtungseinheit erwärmt werden. Dies hat den Vorteil, dass das Gas aufgrund der Heizkammer so warm sein kann, dass es in der Umwandlungseinheit beim Expandieren nicht unter 0°C abkühlen kann. Dadurch kann verhindert werden, dass die Umwandlungseinheit oder die Vorrichtung einfriert. Somit kann in kostengünstiger Weise die Effizienz der Vorrichtung gesteigert werden.

Die mindestens eine Heizkammer kann zum Heizen der Verdichtungseinheit, insbesondere der mindestens eine Verdichtungskammer, ausgebildet sein. Beispielsweise kann die mindestens eine Heizkammer eine gute Wärmeleitung zur mindestens einen Verdichtungskammer aufweisen. Die mindestens eine Heizkammer kann für eine Verbrennungstemperatur von 500°C-1000°C, bevorzugt für eine Verbrennungstemperatur von 600°C-900°C, ausgebildet sein.

Die mindestens eine Heizkammer kann eine räumliche Erstreckung innerhalb der Verdichtungseinheit aufweisen. Die mindestens eine Heizkammer kann beispielsweise mindestens ein elektrisches Heizelement umfassen. Die mindestens eine Heizkammer kann über eine externe Quelle erwärmt werden. Beispielsweise kann die mindestens eine Heizkammer einen Radiator umfassen. Beispielsweise kann die mindestens eine Heizkammer einen Wärmetauscher umfassen.

Insbesondere kann die mindestens eine Heizkammer zum Verbrennen eines Brennstoffs ausgebildet sein. Auf diese Weise kann die Heizkammer besonders einfach ausgestaltet sein, sodass die Vorrichtung kostengünstig sein kann. Zudem kann die Heizkammer hierdurch besonders effizient und somit auch die Vorrichtung besonders effizient sein. Zum Verbrennen eines Brennstoffs kann die mindestens eine Heizkammer eine Öffnung für einen Brennstoff umfassen. Der Brennstoff kann Treibstoff, Gas, insbesondere Erdgas und/oder Flüssiggas, Kohle, Holz, beispielsweise Scheitholz oder Holzpellets, Biomasse, beispielsweise Stroh, Öl, beispielsweise Pflanzenöl und/oder Heizöl sein.

Insbesondere kann die mindestens eine Heizkammer zum Verbrennen von Wasserstoff ausgebildet sein. Auf diese Weise kann die Vorrichtung besonders effizient und umweltfreundlich sein. Zum einen kann Wasserstoff effizient mit überschüssiger elektrischer Energie gewonnen werden, sodass die Vorrichtung effizienter werden kann, da die überschüssige regenerative Energie zur Gewinnung des Wasserstoffs eingesetzt werden kann. Zum anderen kann die Verbrennung von Wasserstoff besonders umweltfreundlich sein, da als Verbrennungsprodukt lediglich Wasser entsteht.

In einem Ausführungsbeispiel kann die Verdichtungseinheit mindestens einen Wärmetauscher umfassen, wobei der mindestens eine Wärmetauscher derart ausgebildet sein kann, dass der mindestens eine Wärmetauscher die Abwärme der mindestens einen Heizkammer zum Erwärmen des Einlasses für ein Gas, der mindestens einen Verdichtungskammer und/oder der fluidisch Verbindung zwischen dem Einlass und dem Ausgang nutzen kann.

Auf diese Weise kann die Effizienz der Vorrichtung gesteigert werden, da die Abwärme und somit die Wärme der mindestens einen Heizkammer zum Erwärmen des Gases genutzt werden kann. Somit kann mehr Wärmenergie aus der mindestens einen Heizkammer nutzbar gemacht werden, sodass der Wirkungsgrad der Vorrichtung erhöht werden kann. Insbesondere kann beim Verbrennen eines Brennstoffs die Abgaswärme mit dem mindestens einen Wärmetauscher nutzbar gemacht werden. Somit kann der mindestens eine Wärmetauscher die mindestens einen Heizkammer dabei unterstützen, dass das Gas so warm sein kann, dass es in der Umwandlungseinheit beim Expandieren nicht unter 0°C abkühlen kann.

Wenn der mindestens eine Wärmetauscher derart ausgebildet sein kann, dass der mindestens eine Wärmetauscher die Abwärme der mindestens einen Heizkammer zum Erwärmen des Einlass für ein Gas und/oder der fluidisch Verbindung zwischen dem Einlass und dem Ausgang nutzen kann, kann das Gas bereits vor der mindestens einen Verdichtungskammer erwärmt werden. Auf diese Weise kann das Gas länger mit dem mindestens einen Wärmetauscher in Kontakt sein, sodass mehr Wärme übertragen werden kann. Dies kann die Effizienz der Vorrichtung steigern.

Der mindestens eine Wärmetauscher kann eine Vorrichtung sein, die thermische Energie von einem Stoffstrom auf einen anderen übertragen kann. Der mindestens eine Wärmetauscher kann ein indirekter Wärmetauscher sein. Der mindestens eine Wärmetauscher kann die Wärme von der mindestens einen Heizkammer, beispielsweise von dem Verbrennungsgas der Brennstoffe, auf das Gas in der mindestens einen Verdichtungskammer übertragen, wobei der Wärmetauscher das Verbrennungsgas von dem Gas in der mindestens einen Verdichtungskammer durch ein Trennelement trennen kann. Das Trennelement kann insbesondere wärmedurchlässig sein.

Die Abwärme kann jegliche Wärme der mindestens einen Heizkammer sein, die ohne den Wärmetauscher an die Umwelt abgegeben würde und nicht zum Erwärmen des Einlass für ein Gas, der mindestens einen Verdichtungskammer und/oder der fluidisch Verbindung zwischen dem Einlass und dem Ausgang beitragen kann.

In einem Ausführungsbeispiel kann die mindestens eine Verdichtungskammer und/oder die mindestens eine Heizkammer ein Motor, insbesondere ein Wankelmotor, sein.

Wenn die mindestens eine Verdichtungskammer ein Motor sein kann, kann der Wirkungsgrad der mindestens einen Verdichtungskammer besonders hoch sein, sodass die Vorrichtung besonders effizient sein kann. Ein Motor zudem kann den Vorteil eines kontinuierlichen Betriebs bei einer konstanten Drehzahl gewährleisten, sodass ein besonders konstanter Gasfluss und ein besonders konstanter Druck an der Umwandlungseinheit anliegen können. Dadurch kann die Vorrichtung besonders effizient sein. Ferner kann die Vorrichtung mit einem Motor kostengünstig und platzsparend ausgebildet sein. Wenn die mindestens eine Verdichtungskammer ein Motor sein kann, kann der Motor das Gas Ansaugen, Verdichten und Ausstoßen. Hierbei kann statt einer Zufuhr von Brennstoff das Verdichtungsgas über den Eintritt zugeführt werden, sodass das Verdichtungsgas durch die Expansion den Motor antreibt.

Wenn die mindestens eine Heizkammer ein Motor sein kann, kann die Verbrennung des Brennstoffs besonders effizient erfolgen. Auf diese Weise kann ein besonders großer Teil der Energie im Brennstoff in thermische Energie umgewandelt werden. Mithin kann der Heizer und folglich die Vorrichtung besonders effizient sein.

Wenn die mindestens eine Heizkammer ein Motor sein kann, kann die mindestens eine Heizkammer derart ausgebildet sein, dass die mindestens eine Heizkammer Energie, insbesondere in Form von Bewegung, an die mindestens eine Verdichtungskammer übertragen kann. Auf diese Weise kann die mindestens eine Heizkammer die Verdichtungskammer antreiben, sodass die Effizienz der Vorrichtung weiter gesteigert werden kann.

Ein Wankelmotor kann besonders kostengünstig und wartungsarm sein. Insbesondere kann ein Wankelmotor besonders leicht zu reparieren sein, sodass die Betriebskosten der Vorrichtung besonders gering sein können. Mithin kann die Vorrichtung besonders effizient und kostengünstig betrieben werden.

Der Motor kann eine Kraftmaschine sein, die mechanische Arbeit verrichten kann, indem sie pneumatische Energie in Bewegungsenergie umwandeln kann.

In einem Ausführungsbeispiel kann die Verdichtungseinheit, insbesondere die mindestens eine Verdichtungskammer und/oder die mindestens eine Heizkammer, mechanisch, insbesondere über ein Getriebe, mit der Umwandlungseinheit (4) gekoppelt sein.

Auf diese Weise kann durch die Verdichtungseinheit die Umwandlungseinheit oder die Verdichtungseinheit durch die Umwandlungseinheit gestartet werden. Auf diese Weise kann die Vorrichtung besonders effizient sein.

"Mechanisch gekoppelt" kann bedeuten, dass eine Bewegung in der Verdichtungseinheit über eine Mechanik in eine Bewegung in der Umwandlungseinheit oder eine Bewegung in der Umwandlungseinheit über eine Mechanik in eine Bewegung in der Verdichtungseinheit umgewandelt wird.

Wenn die Verdichtungseinheit mit der Umwandlungseinheit mechanisch über ein Getriebe gekoppelt sein kann, können beispielsweise die Drehzahlen der Verdichtungseinheiten und der Umwandlungseinheit voneinander abweichen. Beispielsweise kann die mindestens eine Verdichtungskammer der Motor sein und die Umwandlungseinheit kann einen rotierendes Element aufweisen, wobei die Drehzahl der Verdichtungskammer und des rotierenden Elements durch das Getriebe variieren kann.

In einem Ausführungsbeispiel kann die Verdichtungseinheit mindestens zwei Verdichtungskammern umfassen, wobei die mindestens eine Heizkammer zwischen den mindestens zwei Verdichtungskammern angeordnet sein kann.

Auf diese Weise kann die Wärme der mindestens einen Heizkammer besonders effizient auf die mindestens zwei Verdichtungskammern übertragen werden, da die mindestens eine Heizkammer weniger freie Flächen aufweisen kann, über die Wärme verloren gehen kann. Folglich kann mit der mindestens einen Heizkammer das Gas in den mindestens zwei Verdichtungskammern besonders effizient erwärmt werden. Dies kann den Vorteil haben, dass das Gas aufgrund der Heizkammer so warm sein kann, dass es in der Umwandlungseinheit beim Expandieren nicht unter 0°C abkühlen kann. Dadurch kann verhindert werden, dass die Umwandlungseinheit oder die Vorrichtung einfriert. Somit kann in kostengünstiger Weise die Effizienz der Vorrichtung gesteigert werden.

Die mindestens eine Heizkammer kann derart zwischen den mindestens zwei Verdichtungskammern angeordnet sein, dass jeweils eine Wand der mindestens einen Heizkammer jeweils eine Wand jeder der mindestens zwei Verdichtungskammern kontaktieren kann. Alternativ kann jeweils eine Wand der mindestens einen Heizkammer jeweils eine Wand jeder der mindestens zwei Verdichtungskammern sein. Beispielsweise kann eine erste Wand der mindestens einen Heizkammer gleichzeitig die Wand der ersten der mindestens zwei Verdichtungskammern sein und eine zweite Wand der mindestens einen Heizkammer kann gleichzeitig die Wand der zweiten der mindestens zwei Verdichtungskammern sein. Eine Kombination der Alternativen kann auch möglich sein. Zum Beispiel kann eine Wand der mindestens einen Heizkammer eine Wand der ersten der mindestens zwei Verdichtungskammern kontaktieren kann und eine zweite Wand der mindestens einen Heizkammer kann eine Wand der zweiten der mindestens zwei Verdichtungskammern sein.

Die mindestens eine Heizkammer kann derart zwischen den mindestens zwei Verdichtungskammern angeordnet sein, sodass eine Gerade durch die beiden Mittelpunkte der mindestens zwei Verdichtungskammern durch den Mittelpunkt der mindestens einen Heizkammer verlaufen kann. Die mindestens eine Heizkammer kann derart zwischen den mindestens zwei Verdichtungskammern angeordnet sein, sodass eine Gerade durch die beiden Mittelpunkte der mindestens zwei Verdichtungskammern durch die mindestens einen Heizkammer verlaufen kann. Die mindestens eine Heizkammer kann derart zwischen den mindestens zwei Verdichtungskammern angeordnet sein, sodass eine Gerade durch die mindestens zwei Verdichtungskammern durch die mindestens einen Heizkammer verlaufen kann.

In einem Ausführungsbeispiel kann die Umwandlungseinheit eine Strömungsmaschine, insbesondere ein Lamellenmotor oder eine Turbine, sein.

Auf diese Weise kann die Umwandlungseinheit die Energie aus dem Druck besonders effizient in Energie, insbesondere elektrische Energie, umwandeln. Somit kann die Vorrichtung besonders effizient sein.

Eine Strömungsmaschine kann eine Fluidenergiemaschine sein. Bei der Strömungsmaschine kann die Energieübertragung von Strömungsenergie, beispielsweise Druck, in mechanische Energie über ein Laufrad mit Schaufeln erfolgen.

Der Lamellenmotor oder die Turbine können besonders effizient und wartungsarm sein, sodass die Vorrichtung besonders effizient und wartungsarm sein kann.

In einem Ausführungsbeispiel kann die Umwandlungseinheit mindestens einen Zugang für ein Druckgas umfassen.

Auf diese Weise kann ein Druckgas über eine externe Quelle der Umwandlungseinheit zugeführt werden, um die Umwandlungseinheit beispielsweise zu starten. Auf diese Weise kann die Vorrichtung besonders effizient sein, da ein Druckgas zu Starten der Vorrichtung verwendet werden kann, das zuvor aus umweltfreundlichen regenerativen Energien gewonnen sein kann. Mithin kann die Vorrichtung besonders umweltfreundlich sein.

Ein Druckgas kann ein Gas mit einem ausreichenden Druck zum Starten der Umwandlungseinheit, insbesondere der Strömungsmaschine der Umwandlungseinheit, sein. Das Druckgas kann einen Druck größer oder gleich dem Druck aus der Verdichtungseinheit aufweisen. Der Zugang kann für einen Druck von 6-12 bar, bevorzug von 8-10 bar ausgebildet sein.

In einem Ausführungsbeispiel kann die Umwandlungseinheit einen Wechselstromgenerator und/oder einen Gleichstromgenerator umfassen.

Auf diese Weise kann die Vorrichtung besonders effizient und einfach elektrische Energie aus dem gespeicherten Druck bereitstellen. Wenn die Umwandlungseinheit einen Wechselstromgenerator und einen Gleichstromgenerator umfassen kann, kann die Vorrichtung besonders vielseitig sein, da die Vorrichtung sowohl Gleichstrom, beispielsweise für ein lokales Netz, und Wechselstrom, beispielsweise für das Mittelspannungsnetz oder das Niederspannungsnetz, bereitstellen kann.

In einem Ausführungsbeispiel kann die Vorrichtung eine Isolierkammer umfassen, wobei die Verdichtungseinheit und die Umwandlungseinheit in der Isolierkammer angeordnet sein können.

Auf diese Weise kann die Wärme in der Vorrichtung gehalten werden, sodass die Temperatur der Vorrichtung im Betrieb steigen kann. Hierdurch kann die Temperatur des Gases im Betrieb auf einer hohen Temperatur gehalten werden, sodass ein Absenken der Temperatur des Gases unter 0°C verhindert werden kann. Mithin kann die Vorrichtung besonders effizient sein. Zudem kann die bei der Umwandlung von Energie, beispielsweise durch die Wandlung von Druck in Bewegungsenergie in elektrische Energie, freigesetzte Wärme von der Vorrichtung genutzt werden. Mithin kann der Wirkungsgrad der Vorrichtung gesteigert werden, sodass die Vorrichtung zugleich umweltfreundlicher und effizienter sein kann.

Eine Isolierkammer kann eine räumliche Begrenzung sein. Die Isolierkammer kann Wände zur räumlichen Begrenzung aufweisen. Die Isolierkammer kann eine geringe Wärmeübertragung von dem Innenraum der Isolierkammer an die Umgebung außerhalb der Isolierkammer aufweisen.

Gemäß einem zweiten Aspekt der Erfindung wird die oben genannte Aufgabe durch ein System zur Umwandlung von Druck in Energie, insbesondere elektrische Energie, gelöst, wobei das System eine erfindungsgemäße Vorrichtung umfasst, wobei das System mindestens eine regenerative Energiequelle, insbesondere eine Solaranlage und/oder eine Windkraftanlage, umfasst, wobei das System mindestens einen Verdichtungsgaserzeuger umfasst, wobei das System derart ausgebildet ist, dass die Energie aus der mindestens einen regenerative Energiequelle zur Erzeugung des Verdichtungsgases mit dem mindestens einen Verdichtungsgaserzeuger genutzt wird, und wobei insbesondere das System mindestens einen Verdichtungsgasbehälter zur Lagerung des Verdichtungsgases umfasst.

Das System bietet den Vorteil, dass Gas durch die Verdichtung in der Verdichtungskammer wiederverwendet werden kann. Mithin wird der Druck des Gas am Ausgang der Umwandlungseinheit nicht an die Umwelt abgegeben, sondern durch eine Verdichtung und damit eine Druckerhöhung in der Verdichtungseinheit wieder für die Umwandlungseinheit nutzbar gemacht. Auf diese Weise ist das System besonders effizient. Zudem wird eine geringe Mengen an Gas, das unter Druck steht, benötigt. Somit kann der Bauraum reduziert werden, sodass das System kostengünstiger und platzsparender ist. Das System ist insbesondere kostengünstig, da keine aufwendigen Materialien notwendig sind wie beispielsweise für Lithiumbatterien. Ferner ist das System besonders wartungsarm, da die Verwendung und Nutzung von Druck als Energieform besonders wenig Verschleiß erzeugt. Mithin ist das System besonders wartungsarm. Zudem ist das System besonders umweltfreundlich, da das Verdichtungsgas mittels der mindestens einen regenerativen Energiequelle erzeugt wird.

Die mindestens eine regenerative Energiequelle kann eine Energiequelle sein, die unendliche zur Verfügung stehen kann, wie beispielsweise die Sonne, der Wind oder die Geothermie, oder regelmäßig nachwachsen kann, wie beispielsweise Biomasse.

Der mindestens eine Verdichtungsgaserzeuger kann das Verdichtungsgas erzeugen. Beispielsweise kann der mindestens eine Verdichtungsgaserzeuger ein Stickstoffgenerator oder ein Kohlenstoffdioxid-Generator sein. Der mindestens eine Verdichtungsgaserzeuger kann derart ausgebildet sein, dass der mindestens eine Verdichtungsgaserzeuger das Verdichtungsgas erzeugt und verdichtet.

Das System kann derart ausgebildet sein, dass die Energie aus der mindestens einen regenerativen Energiequelle zur Erzeugung des Verdichtungsgases mit dem mindestens einen Verdichtungsgaserzeuger genutzt werden kann Die mindestens eine regenerative Energiequelle kann elektrisch mit dem mindestens einen Verdichtungsgaserzeuger verbunden sein. Die mindestens eine regenerative Energiequelle kann derart elektrisch mit dem mindestens einen Verdichtungsgaserzeuger verbunden sein, sodass die elektrische Energie der mindestens einen regenerativen Energiequelle vom mindestens einen Verdichtungsgaserzeuger zur Erzeugung des Verdichtungsgases genutzt wird. Die mindestens eine regenerative Energiequelle kann, beispielsweise über ein Kabel, elektrisch mit dem mindestens einen Verdichtungsgaserzeuger verbunden sein.

Wenn das System mindestens einen Verdichtungsgasbehälter zur Lagerung des Verdichtungsgases umfasst, kann überschüssige Energie aus der mindestens einen regenerativen Energiequelle als Verdichtungsgas gespeichert werden und bei Bedarf genutzt werden. Mithin kann das System besonders umweltfreundlich und effizient sein.

Der mindestens eine Verdichtungsgasbehälter zur Lagerung des Verdichtungsgases kann ein Behälter jeglicher Form sein. Der mindestens eine Verdichtungsgasbehälter kann für das Verdichtungsgas impermeable sein. Der mindestens eine Verdichtungsgasbehälter kann beispielsweise eine Gasflasche sein. Der mindestens eine Verdichtungsgasbehälter kann fluidisch mit dem Verdichtungsgaserzeuger verbunden sein und/oder der Verdichtungsgaserzeuger kann in dem mindestens einen Verdichtungsgasbehälter angeordnet sein.

In einem Ausführungsbeispiel kann das System mindestens einen Drucklufterzeuger umfassen, wobei das System derart ausgebildet sein kann, dass die Energie aus der mindestens einen regenerativen Energiequelle zur Erzeugung der Druckluft mit dem Drucklufterzeuger genutzt werden kann, und wobei insbesondere das System mindestens einen Druckluftbehälter zur Lagerung der Druckluft umfassen kann.

Das System kann überschüssige Energie aus der mindestens einen regenerative Energiequelle zur Erzeugung der Druckluft nutzen, sodass das System besonders effizient sein kann.

Der mindestens eine Drucklufterzeuger kann die Druckluft erzeugen. Beispielsweise kann der mindestens eine Drucklufterzeuger eine Pumpe sein.

Wenn das System mindestens einen Druckluftbehälter zur Lagerung der Druckluft umfassen kann, kann überschüssige Energie aus der mindestens einen regenerativen Energiequelle als Druckluft gespeichert werden und bei Bedarf genutzt werden. Mithin kann das System besonders effizient und umweltfreundlich sein.

Der mindestens eine Druckluftbehälter zur Lagerung der Druckluft kann ein Behälter jeglicher Form sein. Der mindestens eine Druckluftbehälter kann für die Druckluft impermeable sein. Der mindestens eine Druckluftbehälter kann beispielsweise eine Gasflasche sein. Der mindestens eine Druckluftbehälter kann fluidisch mit dem mindestens einen Drucklufterzeuger verbunden sein und/oder der mindestens einen Drucklufterzeuger kann in dem mindestens einen Druckluftbehälter angeordnet sein. Der mindestens eine Druckluftbehälter kann mit dem mindestens einen Drucklufteinlass fluidisch verbunden sein.

In einem Ausführungsbeispiel kann das System mindestens einen Brennstofferzeuger umfassen, wobei das System derart ausgebildet sein kann, dass die Energie aus der mindestens einen regenerativen Energiequelle zur Erzeugung des Brennstoffs mit dem mindestens einen Brennstofferzeuger genutzt werden kann, und wobei insbesondere das System mindestens einen Brennstoffbehälter zur Lagerung des Brennstoffs umfassen kann.

Das System kann vorteilhafterweise überschüssige Energie aus der mindestens einen regenerativen Energiequelle zur Erzeugung des Brennstoffs nutzen, sodass das System besonders effizient ist.

Der mindestens eine Brennstofferzeuger kann den Brennstoff erzeugen. Beispielsweise kann der mindestens eine Brennstofferzeuger ein Wasserstoffgenerator sein.

Wenn das System mindestens einen Brennstoffbehälter zur Lagerung des Brennstoffs umfassen kann, kann überschüssige Energie aus der mindestens einen regenerativen Energiequelle als Brennstoff gespeichert werden und bei Bedarf genutzt werden. Mithin kann das System besonders effizient und umweltfreundlich sein.

Der mindestens eine Brennstoffbehälter zur Lagerung des Brennstoffs kann ein Behälter jeglicher Form sein. Der mindestens eine Brennstoffbehälter kann für den Brennstoff impermeable sein. Der mindestens eine Brennstoffbehälter kann beispielsweise eine Gasflasche sein. Der mindestens eine Brennstoffbehälter kann fluidisch mit dem mindestens einen Brennstofferzeuger verbunden sein und/oder der mindestens einen Brennstofferzeuger kann in dem mindestens einen Brennstoffbehälter angeordnet sein. Der mindestens eine Brennstoffbehälter kann mit der mindestens einen Heizkammer fluidisch verbunden sein.

In einem Ausführungsbeispiel kann das System mindestens einen Druckgaserzeuger umfassen, wobei das System derart ausgebildet sein kann, dass die Energie aus der mindestens einen regenerativen Energiequelle zur Erzeugung des Druckgases mit dem mindestens einen Druckgaserzeuger genutzt werden kann, und wobei insbesondere das System mindestens einen Druckgasbehälter zur Lagerung des Druckgases umfassen kann.

Auf diese Weise kann das System vorteilhafterweise überschüssige Energie aus der mindestens einen regenerativen Energiequelle zur Erzeugung des Druckgases nutzen, sodass das System besonders effizient ist.

Der mindestens eine Druckgaserzeuger kann das Druckgas erzeugen. Beispielsweise kann der mindestens eine Druckgaserzeuger eine Pumpe sein.

Wenn das System mindestens einen Druckgasbehälter zur Lagerung des Druckgases umfassen kann, kann überschüssige Energie aus der mindestens einen regenerativen Energiequelle als Druckgas gespeichert werden und bei Bedarf genutzt werden. Mithin kann das System effizient und zugleich umweltfreundlich sein.

Der mindestens eine Druckgasbehälter zur Lagerung des Druckgases kann ein Behälter jeglicher Form sein. Der mindestens eine Druckgasbehälter kann für das Druckgas impermeable sein. Der mindestens eine Druckgasbehälter kann beispielsweise eine Gasflasche sein. Der mindestens eine Druckgasbehälter kann fluidisch mit dem mindestens einen Druckgaserzeuger verbunden sein und/oder der mindestens einen Druckgaserzeuger kann in dem mindestens eine Druckgasbehälter angeordnet sein. Der mindestens eine Druckgasbehälter kann mit dem Zugang fluidisch verbunden sein.

Gemäß einem dritten Aspekt der Erfindung wird die oben genannte Aufgabe durch eine Verwendung einer erfindungsgemäßen Vorrichtung oder eines erfindungsgemäßen Systems zur Umwandlung von Druck in Energie, insbesondere elektrische Energie, gelöst.

Gemäß einem vierten Aspekt der Erfindung wird die oben genannte Aufgabe durch ein Verfahren zur Umwandlung von Druck in Energie, insbesondere elektrische Energie, mit einer erfindungsgemäßen Vorrichtung oder einem erfindungsgemäßen System gelöst, bei dem Gas durch den Einlass in die mindestens eine Verdichtungskammer eingelassen wird,
- bei dem insbesondere der Einlass verschlossen wird,
- bei dem ein Verdichtungsgas über den Eintritt in die mindestens eine Verdichtungskammer eingelassen wird,
- bei dem der Druck in der mindestens einen Verdichtungskammer durch das Verdichtungsgas erhöht wird,
- bei dem insbesondere der Zutritt verschlossen wird,
- bei dem das Gas über den Auslass zum Eingang der Umwandlungseinheit geleitet wird,
- bei dem mit der Umwandlungseinheit der Gasdruck in Energie, insbesondere elektrische Energie, umgewandelt wird,
- bei dem das Gas vom Ausgang zum Einlass geleitet wird.

In einem Ausführungsbeispiel kann bei dem Verfahren zusätzlich Druckluft über den mindestens einen Drucklufteinlass in die mindestens eine Verdichtungskammer zur Druckerhöhung eingelassen werden.

In einem Ausführungsbeispiel kann bei dem Verfahren das Gas in der mindestens einen Verdichtungskammer über die mindestens eine Heizkammer aufgeheizt werden, wobei insbesondere in der mindestens einen Heizkammer ein Brennstoff, insbesondere Wasserstoff, verbrannt werden kann.

In einem Ausführungsbeispiel kann bei dem Verfahren die Umwandlungseinheit mit einem Druckgas über den mindestens einen Zugang für ein Druckgas gestartet werden.

Weitere Aufgaben, Merkmale, Vorteile und Aspekte der vorliegenden Erfindung werden für den Fachmann aus der folgenden Beschreibung und den beigefügten Ansprüchen ersichtlich. Es sollte jedoch verstanden werden, dass die folgende Beschreibung, die beigefügten Ansprüche und die spezifischen Beispiele, die bevorzugte Ausführungsformen der Anwendung zeigen, nur zur Veranschaulichung gegeben werden. Verschiedene Änderungen und Modifikationen im Rahmen des Geistes und des Umfangs der offengelegten Erfindung werden dem Fachmann beim Lesen der folgenden Ausführungen ohne weiteres einleuchten.

### DEFINITIONEN

Die folgenden Ausdrücke haben im Allgemeinen vorzugsweise die nachstehend aufgeführten Bedeutungen, sofern sich aus dem Kontext, in dem sie verwendet werden, nichts anderes ergibt.

Der hier verwendete Ausdruck "umfassen" schließt neben seiner wörtlichen Bedeutung auch die Ausdrücke "im Wesentlichen bestehen aus" und "bestehen aus" ein und bezieht sich speziell auf diese. Somit bezieht sich der Ausdruck "umfassen" sowohl auf Ausführungsformen, bei denen der Gegenstand, der speziell aufgeführte Elemente "umfasst", keine weiteren Elemente umfasst, als auch auf Ausführungsformen, bei denen der Gegenstand, der speziell aufgeführte Elemente "umfasst", weitere Elemente umfassen kann und/oder tatsächlich umfasst. Ebenso ist der Ausdruck "haben" als der Ausdruck "umfassen" zu verstehen, der auch die Ausdrücke "im Wesentlichen bestehen aus" und "bestehen aus" einschließt und sich auf diese bezieht. Der Ausdruck "bestehen im Wesentlichen aus" bezieht sich, soweit möglich, insbesondere auf Ausführungsformen, bei denen der Gegenstand neben den spezifisch aufgeführten Elementen, aus denen der Gegenstand im Wesentlichen besteht, 20 % oder weniger, insbesondere 15 % oder weniger, 10 % oder weniger oder insbesondere 5 % oder weniger weitere Elemente umfasst.

### FIGUREN

- Fig. 1: schematische Ansicht einer Vorrichtung;
- Fig. 2: schematische Ansicht einer Verdichtungskammer als Wankelmotor;
- Fig. 3: schematische Ansicht einer Heizkammer als Wankelmotor;
- Fig. 4: schematische Ansicht eines Systems.

### SPEZIELLE BESCHREIBUNG

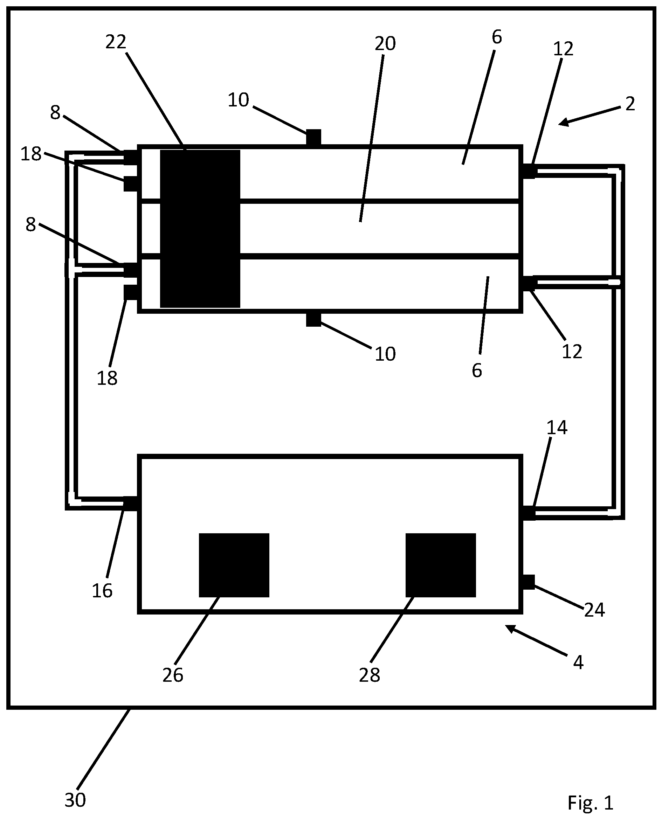

Fig. 1 zeigt eine schematische Ansicht einer Vorrichtung 1 zur Umwandlung von Druck in elektrische Energie.

Die Vorrichtung 1 umfasst eine Verdichtungseinheit 2 und ein Umwandlungseinheit 4. Die Verdichtungseinheit 2 umfasst zwei Verdichtungskammern 6. Jede der zwei Verdichtungskammer 6 umfasst einen Einlass 8 für ein Gas, einen Eintritt 10 für ein Verdichtungsgas und einen Auslass 12 für das Gas. Die Umwandlungseinheit 4 umfasst einen Eingang 14 für das Gas und einen Ausgang 16 für das Gas. Der Auslass 12 für das Gas ist mit dem Eingang 14 für das Gas fluidisch verbunden. Der Einlass 8 für das Gas ist mit dem Ausgang 16 für das Gas fluidisch verbunden. Die Verdichtungskammer 6 ist zum Verdichten von Gas mittels Stickstoff ausgebildet. Die Umwandlungseinheit 4 ist zum Umwandeln von Gasdruck elektrische Energie ausgebildet.

Die zwei Verdichtungskammern 6 umfassen jeweils einen Drucklufteinlass 18. Die Verdichtungseinheit 2 umfasst eine Heizkammer 20. Die Heizkammer 20 ist zum Verbrennen von Wasserstoff ausgebildet.

Die Verdichtungseinheit 2 umfasst einen Wärmetauscher 22. Der Wärmetauscher 22 ist derart ausgebildet, dass der Wärmetauscher 22 die Abwärme der Heizkammer 20 zum Erwärmen der zwei Verdichtungskammern 6 nutzt. Hierzu nimmt der Wärmetauscher 22 die Abwärme der Heizkammer 20 auf, transportiert die Wärme zu den zwei Verdichtungskammern 6 und überträgt die Wärme auf die zwei Verdichtungskammern 6.

Die zwei Verdichtungskammern 6 und die Heizkammer 20 sind Wankelmotoren. Die zwei Verdichtungskammern 6 und die mindestens eine Heizkammer 20 sind mechanisch über ein Getriebe mit der Umwandlungseinheit 4 gekoppelt.

Wie in Fig. 1 zu sehen, umfasst die Verdichtungseinheit 2 zwei Verdichtungskammern 6. Die Heizkammer 20 ist zwischen den zwei Verdichtungskammern 6 angeordnet.

Die Umwandlungseinheit 4 umfasst eine Strömungsmaschine, insbesondere ein Lamellenmotor oder eine Turbine. Die Umwandlungseinheit 4 umfasst einen Zugang 24 für ein Druckgas. Die Umwandlungseinheit 4 umfasst einen Wechselstromgenerator 26 und einen Gleichstromgenerator 28.

Die Vorrichtung 1 umfasst eine Isolierkammer 30. Die Verdichtungseinheit 2 und die Umwandlungseinheit 4 sind in der Isolierkammer 30 angeordnet.

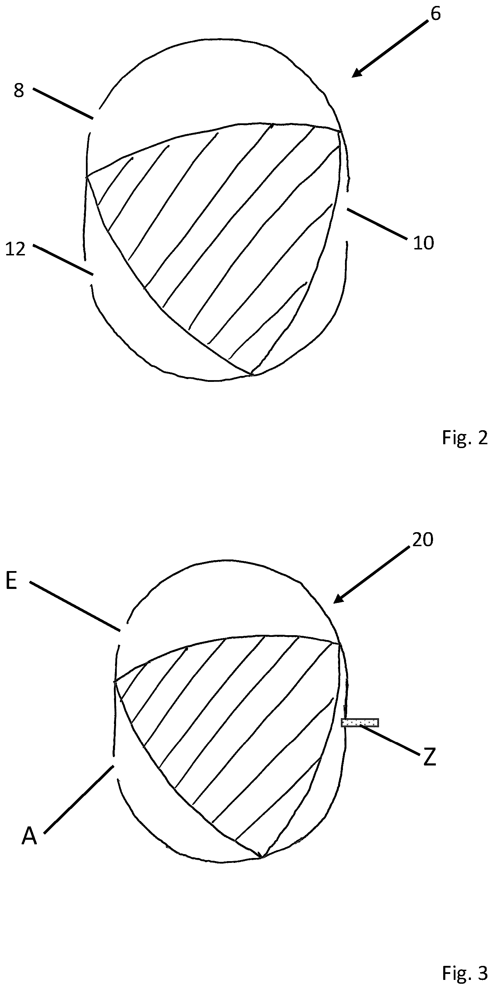

Fig. 2 zeigt eine schematische Ansicht einer Verdichtungskammer 6 als Wankelmotor 6. Die Verdichtungskammer 6 umfasst den Einlass 8 für das Gas, den Eintritt 10 für das Verdichtungsgas und den Auslass 12 für das Gas. Der Wankelmotor 6 saugt an dem Einlass 8 das Gas an und komprimiert das Gas während der Rotation. Beim Eintritt 10 wird das Verdichtungsgas Stickstoff hinzugefügt, wodurch der Druck sich erhöht und der Wankelmotor 6 angetrieben wird. Beim weiteren Rotieren des Wankelmotors 6 wird das Gas am Auslass 12 ausgegeben.

Fig. 3 zeigt eine schematische Ansicht einer Heizkammer 20 als Wankelmotor 20. Der Wankelmotor 20 saugt Wasserstoff als Brennstoff und Sauerstoff an der Öffnung E an und komprimiert den Wasserstoff und den Sauerstoff während der Rotation. Durch die Zündkerze Z wird der Wasserstoff mit dem Sauerstoff verbrannt. Beim weiteren Rotieren des Wankelmotors 20 wird das Abgas an der Öffnung A ausgestoßen.

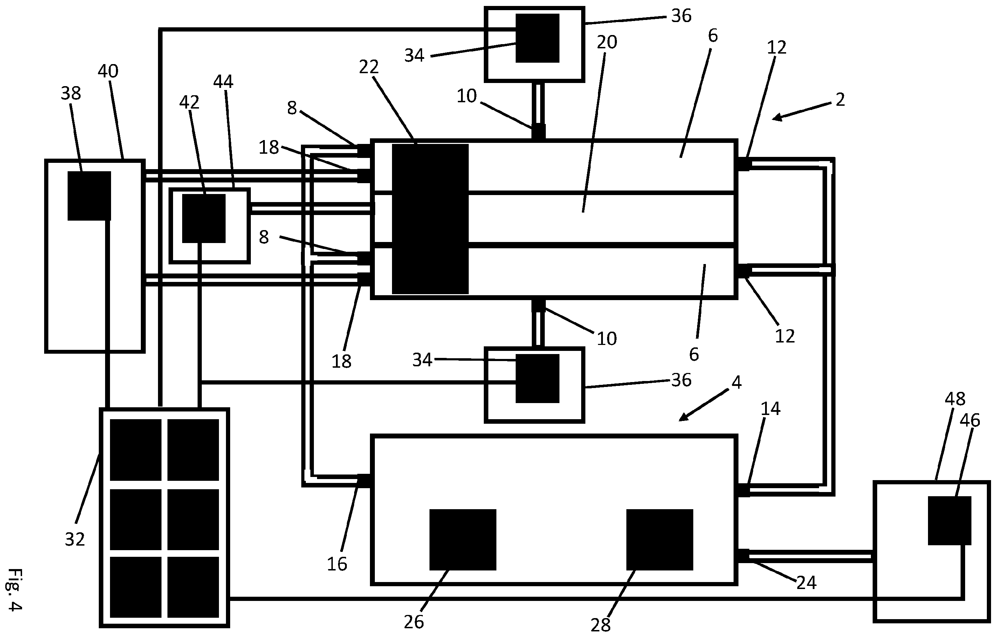

Fig. 4 zeigt eine schematische Ansicht eines Systems zur Umwandlung von Druck in Energie, insbesondere elektrische Energie. Das System umfasst eine erfindungsgemäße Vorrichtung 1. Die Vorrichtung 1 in Fig. 4 entspricht der Vorrichtung 1 in Fig. 1, sodass die Details der Vorrichtung 1 nicht erläutert werden.

Das System umfasst eine regenerative Energiequelle 32 in Form einer Solaranlage. Das System umfasst zwei Verdichtungsgaserzeuger 34. Das System ist derart ausgebildet, dass die Energie aus der regenerativen Energiequelle 32 zur Erzeugung des Verdichtungsgases mit den zwei Verdichtungsgaserzeugern 34 genutzt wird. Hierzu ist die regenerative Energiequelle 32 elektrisch mit den zwei Verdichtungsgaserzeugern 34 verbunden. Das System umfasst zwei Verdichtungsgasbehälter 36 zur Lagerung des Verdichtungsgases.

Jeweils ein Verdichtungsgaserzeuger 34 ist in jeweils einem Verdichtungsgasbehälter 36 angeordnet.

Das System umfasst einen Drucklufterzeuger 38. Das System ist derart ausgebildet, dass die Energie aus der regenerativen Energiequelle 32 zur Erzeugung der Druckluft mit dem Drucklufterzeuger 38 genutzt wird. Hierzu ist die regenerative Energiequelle 32 elektrisch mit dem Drucklufterzeuger 38 verbunden. Das System umfasst einen Druckluftbehälter 40 zur Lagerung der Druckluft. Der Drucklufterzeuger 38 ist in dem Druckluftbehälter 40 angeordnet.

Das System umfasst einen Brennstofferzeuger 42. Das System ist derart ausgebildet, dass die Energie aus der regenerativen Energiequelle 32 zur Erzeugung des Brennstoffs mit dem Brennstofferzeuger 42 genutzt wird. Hierzu ist die regenerative Energiequelle 32 elektrisch mit dem Brennstofferzeuger 42 verbunden. Das System umfasst einen Brennstoffbehälter 44 zur Lagerung des Brennstoffs. Der Brennstofferzeuger 42 ist in dem Brennstoffbehälter 44 angeordnet.

Ferner umfasst das System einen Druckgaserzeuger 46. Das System ist derart ausgebildet, dass die Energie aus der regenerativen Energiequelle 32 zur Erzeugung des Druckgases mit dem Druckgaserzeuger 46 genutzt wird. Hierzu ist die regenerative Energiequelle 32 elektrisch mit dem Druckgaserzeuger 46 verbunden. Das System umfasst einen Druckgasbehälter 48 zur Lagerung des Druckgases. Der Druckgaserzeuger 46 ist in dem Druckgasbehälter 48 angeordnet.

## Patentansprüche

1. Vorrichtung zur Umwandlung von Druck in Energie, insbesondere elektrische Energie,
wobei die Vorrichtung (1) eine Verdichtungseinheit (2) und eine Umwandlungseinheit (4) umfasst,
wobei die Verdichtungseinheit (2) mindestens eine Verdichtungskammer (6) umfasst,
wobei die mindestens eine Verdichtungskammer (6) einen Einlass (8) für ein Gas, einen Eintritt (10) für ein Verdichtungsgas und einen Auslass (12) für das Gas umfasst,
wobei die Umwandlungseinheit (4) einen Eingang (14) für das Gas und einen Ausgang (16) für das Gas umfasst,
wobei der Auslass (12) für das Gas mit dem Eingang (14) für das Gas fluidisch verbunden ist,
wobei der Einlass (8) für das Gas mit dem Ausgang (16) für das Gas fluidisch verbunden ist,
wobei die Verdichtungskammer (6) zum Verdichten von Gas mittels eines Verdichtungsgases, insbesondere Stickstoff und/oder Kohlenstoffdioxid, ausgebildet ist,
wobei die Umwandlungseinheit (4) zum Umwandeln von Gasdruck in Energie, insbesondere elektrische Energie, ausgebildet ist.

2. Vorrichtung nach Anspruch 1,
**dadurch gekennzeichnet, dass**
die mindestens eine Verdichtungskammer (6) mindestens einen Drucklufteinlass (18) umfasst.

3. Vorrichtung nach einem der Ansprüche 1 bis 2,
**dadurch gekennzeichnet, dass**
die Verdichtungseinheit (2) mindestens eine Heizkammer (20) umfasst,
wobei insbesondere die mindestens eine Heizkammer (20) zum Verbrennen eines Brennstoffs, insbesondere von Wasserstoff, ausgebildet ist.

4. Vorrichtung nach einem der Ansprüche 1 bis 3,
**dadurch gekennzeichnet, dass**
die Verdichtungseinheit (2) mindestens einen Wärmetauscher (22) umfasst,
wobei der mindestens eine Wärmetauscher (22) derart ausgebildet ist, dass der mindestens eine Wärmetauscher (22) die Abwärme der mindestens einen Heizkammer (20) zum Erwärmen des Einlasses (8) für ein Gas, der mindestens einen Verdichtungskammer (6) und/oder der fluidisch Verbindung zwischen dem Einlass (8) und dem Ausgang (16) nutzt.

5. Vorrichtung nach einem der Ansprüche 1 bis 4,
**dadurch gekennzeichnet, dass**
die mindestens eine Verdichtungskammer (6) und/oder die mindestens eine Heizkammer (20) ein Motor, insbesondere ein Wankelmotor, ist.

6. Vorrichtung nach einem der Ansprüche 1 bis 5,
**dadurch gekennzeichnet, dass**
die Verdichtungseinheit (2), insbesondere die mindestens eine Verdichtungskammer (6) und/oder die mindestens eine Heizkammer (20), mechanisch, insbesondere über ein Getriebe, mit der Umwandlungseinheit (4) gekoppelt ist.

7. Vorrichtung nach einem der Ansprüche 3 bis 6,
**dadurch gekennzeichnet, dass**
die Verdichtungseinheit (2) mindestens zwei Verdichtungskammern (6) umfasst,
wobei die mindestens eine Heizkammer (20) zwischen den mindestens zwei Verdichtungskammern (6) angeordnet ist.

8. Vorrichtung nach einem der Ansprüche 1 bis 7,
**dadurch gekennzeichnet, dass**
die Umwandlungseinheit (4) eine Strömungsmaschine, insbesondere ein Lamellenmotor oder eine Turbine, umfasst.

9. Vorrichtung nach einem der Ansprüche 1 bis 8,
**dadurch gekennzeichnet, dass**
die Umwandlungseinheit (4) mindestens einen Zugang (24) für ein Druckgas umfasst.

10. Vorrichtung nach einem der Ansprüche 1 bis 9,
**dadurch gekennzeichnet, dass**
die Umwandlungseinheit (4) einen Wechselstromgenerator (26) und/oder einen Gleichstromgenerator (28) umfasst.

11. Vorrichtung nach einem der Ansprüche 1 bis 10,
**dadurch gekennzeichnet, dass**
die Vorrichtung (1) eine Isolierkammer (30) umfasst,
wobei die Verdichtungseinheit (2) und die Umwandlungseinheit (4) in der Isolierkammer (30) angeordnet sind.

12. System zur Umwandlung von Druck in Energie, insbesondere elektrische Energie,
wobei das System eine Vorrichtung (1) gemäß einem der vorherigen Ansprüche umfasst,
wobei das System mindestens eine regenerative Energiequelle (32), insbesondere eine Solaranlage und/oder eine Windkraftanlage, umfasst,
wobei das System mindestens einen Verdichtungsgaserzeuger (34) umfasst,
wobei das System derart ausgebildet ist, dass die Energie aus der mindestens einen regenerativen Energiequelle (32) zur Erzeugung des Verdichtungsgases mit dem mindestens einen Verdichtungsgaserzeuger (34) genutzt wird, und
wobei insbesondere das System mindestens einen Verdichtungsgasbehälter (36) zur Lagerung des Verdichtungsgases umfasst.

13. System nach Anspruch 12,
**dadurch gekennzeichnet, dass**
das System mindestens einen Drucklufterzeuger (38) umfasst,
wobei das System derart ausgebildet ist, dass die Energie aus der mindestens einen regenerativen Energiequelle (32) zur Erzeugung der Druckluft mit dem Drucklufterzeuger (38) genutzt wird, und
wobei insbesondere das System mindestens einen Druckluftbehälter (40) zur Lagerung der Druckluft umfasst

14. System nach einem der Ansprüche 12 oder 13
**dadurch gekennzeichnet, dass**
das System mindestens einen Brennstofferzeuger (42) umfasst,
wobei das System derart ausgebildet ist, dass die Energie aus der mindestens einen regenerativen Energiequelle (32) zur Erzeugung des Brennstoffs mit dem mindestens einen Brennstofferzeuger (42) genutzt wird, und
wobei insbesondere das System mindestens einen Brennstoffbehälter (44) zur Lagerung des Brennstoffs umfasst.

15. System nach einem der Ansprüche 12 bis 14,
**dadurch gekennzeichnet, dass**
das System mindestens einen Druckgaserzeuger (46) umfasst,
wobei das System derart ausgebildet ist, dass die Energie aus der mindestens einen regenerativen Energiequelle (32) zur Erzeugung des Druckgases mit dem mindestens einen Druckgaserzeuger (46) genutzt wird, und
wobei insbesondere das System mindestens einen Druckgasbehälter (48) zur Lagerung des Druckgases umfasst.
